# EUROPEAN PATENT SPECIFICATION

(11) **EP 4 052 588 B1**
(45) Date of publication and mention of the grant of the patent: **08.04.2026**
(21) Application number: 21160730.4
(22) Date of filing: 04.03.2021
(51) Int. Cl.: A23K 10/12, A23K 10/30, A23K 10/38, A23K 50/10, A23K 50/30, A23K 50/75

(54) **FEED INGREDIENT DERIVED FROM BIOMASSES OF SOYBEAN MEAL**
AUS BIOMASSEN VON SOJAMEHL STAMMENDER FUTTERBESTANDTEIL
INGRÉDIENT ALIMENTAIRE DÉRIVÉ DE BIOMASSES DE FARINE DE SOJA

(43) Date of publication of application: 07.09.2022
(73) Proprietor: Hamlet Protein A/S, 8700 Horsens (DK)
(72) Inventor: BRØKNER, Christine, 8700 Horsens (DK); RASMUSSEN, Pernille Toft, 8700 Horsens (DK); DICKOW, Jonatan, 8700 Horsens (DK); THIRUP, Laila, 8700 Horsens (DK)
(74) Representative: Zacco Denmark A/S

(56) References cited:
- EP-A1- 0 896 797
- EP-A1- 2 655 644
- WO-A1-2006/102907
- WO-A1-2014/202711
- KR-A- 20100 078 838

## Description

### FIELD OF THE INVENTION

The present invention relates to a feed ingredient derived from dehulled and defatted soybean meal and spent brewer's yeast, a method for its preparation, and use of the feed ingredient.

### BACKGROUND OF THE INVENTION

There is a need for bio-products that primarily can be used as food or feed or as ingredients in food or feed. The basic constituents in such products are proteins, fats, and carbohydrates. Suitable biomasses for such products are oil bearing crops such as oilseeds, cereals, and legumes. Cereals have a protein content up to 15 % e.g. in wheat, and legumes have a protein content of up to 40 % e.g. in soybeans, based on dry matter. WO2006102907 A1 relates to a fermented protein product derived from yeast and proteinaceous pulse parts, having the advantage of processing good nutritional properties and at the same time enhanced organoleptic properties.

In particular, soybean meal is widely used in animal feed as a source of protein and energy. Beans are important ingredients in animal feeds because of the high protein content. However, beans are also a source of energy due to their oil content. Oil is typically extracted and used in other applications, hereafter the defatted soybean can be used as a principal source of protein in animal feed.

Soybeans are also rich in fiber. Generally, fibers have been considered as anti-nutritional factors because monogastric animals and in particular young animals are not able to degrade fiber due to an unmatured gastro-intestinal microbiota. Fibers are carbohydrates combined by different molecular bindings, and molecular structures, and collectively described as molecules not digested in the small intestine, and includes non-starch polysaccharides (NSP). Fibers can be degraded in the lower part of the digestive systems by the host microbiota through the physiological process of incomplete fermentation. Fiber was originally considered to be an anti-nutritional factor as animals was not able to degrade non-starch polysaccharides (NSP) and subsequently utilize the degradation products e.g. organic acids.

New and more advanced feed additives in the form of either in-feed enzymes or probiotics are now available in animal feed. The purpose of some specific feed additives is to utilize more of the beans and through that minimize excreta and improve utilization of the bean. In some animal feeding, it is now common to add "exogenous" enzymes to the final diet formulation, but the enzyme is not in action before it is consumed with the rest of the diet, working in the gut environment of the animal (Kiarie et al 2013, Scapini et al 2018). The use of yeast as a production aid to degrade NSP and protein structures of soybeans has only been described to a limited degree.

Surprisingly, it has now been found by the present inventors, that when one treats a biomass comprising at least 50 % by weight soybean with yeast added in a specified amount, the process can degrade NSP and protein structures; the yeast expresses specific carbohydrate and protein targeting/modifying enzymes.

Accordingly, the object of the present invention is to provide a new fermented feed ingredient having a higher content of soluble NSP than soybean meal after processing with yeast.

Another object is to provide a product having a beneficial peptide size distribution. By feeding an animal with the product of the invention, more protein will be absorbed in the small intestine so that less protein will be bypassing the small intestine and become excreted in the faeces.

Yet another object is to provide a new product that produces organic acids when fed to the animal and provide more energy to the animals.

It is also an object to provide a method for preparing the new feed ingredient.

Finally, it is an object to provide improved growth performance and better weight uniformity in pre-weaned animals as a response to better utilization of the feed ingredient.

These objects are fulfilled with the product of the present invention.

### SUMMARY OF THE INVENTION

Accordingly, in a first aspect the present invention relates to a fermented feed ingredient derived from spent brewer's yeast and a biomass of proteinaceous plant parts, where said biomass comprises 50% by weight or more of dehulled and defatted soybean meal, wherein the crude protein content of said fermented feed ingredient is in the range of from 35% to 65% by weight on dry matter basis, wherein from 2% to 8% by weight on dry matter basis of the protein is derived from yeast, and wherein part of the insoluble non-starch polysaccharides (NSP) in the biomass has been solubilised by processing with the spent brewer's yeast whereby the fermented feed ingredient comprises an at least 10 % higher content of soluble non-starch polysaccharides (NSP) than the unprocessed soybean meal in the biomass.

In a second aspect the invention relates to a method for preparing a fermented feed ingredient according to the invention, the method comprising mixing a biomass of proteinaceous plant parts, where said biomass comprises 50% by weight or more of dehulled and defatted soybean meal with spent brewer's yeast in a ratio of biomass to yeast of 100:2 to 100:8 by weight of dry matter, and water, to a reaction dry matter content of 44% to 53% and feeding the resulting mixture to a reaction container, where after the mixture is incubated for 8-20 hours at 24-35 °C, optionally heat treated, and dried to 3% to 10% moisture.

Surprisingly, the present inventors have found that when they apply spent brewer's yeast in a specified amount, the enzymes - having carbohydrase activity (such as NSP-ase activity) and protease activity - can modify the structures of the NSP and the proteins in soybean meal (SBM) in a favourable way. Therefore, when a biomass comprising predominantly soybean meal, e.g. with at least 50 % by weight SBM, is processed with spent brewer's yeast it is possible to solubilise a part of the insoluble NSP in the biomass thereby providing a new feed ingredient having a higher content of soluble NSP than the soybean meal. Degradation of NSP in the soybeans and the production of organic acids when fed to the animal provide more energy to the animals, in piglets as well as all other (farming and domestic) animals, and also provides improved growth performance and better weight uniformity in pre-weaned animals as a response to better utilization of the feed ingredient.

In addition to increased solubility of the NSP, the new product has surprisingly further improved product characteristics when comparing to its raw material in the form of a beneficial peptide size distribution of the protein.

In a third aspect, the invention relates to use of a fermented feed ingredient according to the invention for the manufacture of a processed feed product for animal consumption.

The fermented feed ingredient may be applied in a feed product or a nutritional supplement for production animals containing from 0.5 to 99% by weight of the feed ingredient of the invention, such as a feed product for use in a diet for production animals, preferably newborn and young animals, such as piglets, calves, and poultry.

### Definitions

In the context of the present invention, the following terms are meant to comprise the following, unless defined elsewhere in the description.

### Biomass:

Comprises biological material produced by the photosynthesis and that can be used in industrial production. In the present context, biomass refers to proteinaceous plant parts - e.g. comprising 50% by weight or more of dehulled and defatted soybean meal. The remaining proteinaceous plant parts may e.g. be selected from seeds, cereals, pulses, grasses, such as beans, peas, and Lucerne, and mixtures thereof.

### Soybean products:

Refers to plant matter in the form of soybean products, in particular products from soy beans, and mixtures thereof. The soybean can be from any soybean source, such as from South or North America or Asia or Europe, and it can be of gene modified origin (GMO) or of non-gene modified origin (non-GMO). Soybean meal (SBM) is dehulled and defatted soybean.

### Dietary fibres

Dietary fibres comprise soluble and insoluble, non-starch polysaccharides (NSP) and may comprise oligosaccharides, lignin, and resistant starch. The raw biomasses selected in the context of the present invention only contain minor amounts of oligosaccharides and resistant starch, or are substantially free of resistant starch. Four main analytical methods are used to describe fibers in animal feeds. The dietary fiber analysis is the most detailed and descriptive methodology to identify different fiber fractions. The methodology quantifies the content of both soluble and insoluble non-starch polysaccharides (NSP) (Englyst et al., 1994).

### Spent brewer's yeast

Spent brewer's yeast is known to the skilled person and is a by-product from brewing. Spent brewer's yeast may e.g. belong to the *Saccharomyces cerevisiae* strains.

### Feed products

Comprise ready-to-use feed or feed ingredients for production animals such as piglets, calves, poultry, furred animals, and sheep.

The term "comprising" is to be interpreted as specifying the presence of the stated part(s), step(s), feature(s), composition(s), chemical(s), or component(s), but does not exclude the presence of one or more additional parts, steps, features, compositions, chemicals or components. E.g., a composition comprising a chemical compound may thus comprise additional chemical compounds, etc.

The invention is illustrated in the drawing, wherein:
Figure 1 shows screening results of the content of soluble and insoluble NSP in five different batches (batches 1-5) of the invention processed with spent-brewer's yeast and corresponding SBM (raw untreated) products (SBM 1-5).
Figure 2a shows the production of organic acids in the animal after feeding with a product of the invention in comparison with feeding with untreated SBM.
Figure 2b shows the increase in metabolisable energy (ME) in the animal after feeding with a product of the invention in comparison with feeding with untreated SBM.
Figure 3 shows the growth performance (body weight/age) in calves after feeding with a product of the invention in comparison with feeding untreated SBM.
Figure 4 shows the weight uniformity in pre-weaned calves after feeding with a product of the invention in comparison with feeding with untreated SBM.
Figures 5 and 6 show the growth performance and weight uniformity in lambs after feeding with a product of the invention in comparison with feeding with untreated SBM.
Figures 7 and 8 show the relative peptide size distribution in five different batches (batches 6-10) of the invention processed with spent-brewer's yeast and corresponding SBM (raw untreated) products (SBM 6-10).
Figure 9 shows peptide size distribution in the soluble phase of two different batches of the invention and corresponding SBM (raw untreated) products.
Figure 10 shows plasma analysis for individual amino acids in blood samples after feeding with a product of the invention and untreated SBM, respectively, originated from the same soy batch. Blood samples were collected at time points 0, 30, 60, 90, 120, 180 and 360 minutes after feeding.

### DETAILED DESCRIPTION OF THE INVENTION

In its first aspect, the invention relates to a fermented feed ingredient derived from spent brewer's yeast and a biomass of proteinaceous plant parts, where said biomass comprises 50% by weight or more of dehulled and defatted soybean meal, wherein the crude protein content of said fermented feed ingredient is in the range of from 35% to 65% by weight on dry matter basis, wherein from 2% to 8% by weight on dry matter basis of the protein is derived from yeast, and wherein part of the insoluble non-starch polysaccharides (NSP) in the biomass has been solubilised by processing with the spent brewer's yeast whereby the fermented feed ingredient comprises an at least 10 % higher content of soluble non-starch polysaccharides (NSP) than the unprocessed soybean meal in the biomass.

In one embodiment of the invention in its first aspect, the spent brewer's yeast may e.g. be present in an amount of from 2 to 8 %, such as 2%, 2.5%, 3%, 3.5%, 4%, 4.5, 5%, 6%, 7%, or 8% by weight of dry matter.

In any of the embodiments of this aspect, the biomass of proteinaceous plant part may comprise 50% by weight or less of proteinaceous plant part other than dehulled and defatted soybean meal.

In any of the embodiments of the invention, the biomass of proteinaceous plant part may comprise at least 55% by weight of dehulled and defatted soybean meal, such as at least 60% by weight, such as at least 65% by weight, such as at least 70% by weight, such as at least 75% by weight, such as at least 80% by weight, such as at least 85% by weight, such as at least 90% by weight, such as at least 95% by weight, or such as at least 99% by weight of dehulled and defatted soybean meal.

In any of the embodiments of the invention, the biomass of proteinaceous plant part may comprise dehulled and defatted soybean meal in the range of from 50% to 100% by weight, such as in the range of from 60% to 100% by weight, such as in the range of from 70% to 100% by weight, such as in the range of from 80% to 100% by weight.

In any of the embodiments of the invention, the crude protein content of the feed ingredient may be in the range of from 40% to 65% by weight on dry matter basis, such as in the range of from 45% to 65% by weight on dry matter basis, or such as in the range of from 50% to 60% by weight on dry matter basis.

In any of the embodiments of the invention, from 2% to 6% by weight on dry matter basis of the protein may be derived from yeast, or such as from 2% to 5% by weight on dry matter basis of the protein may be derived from yeast.

In any of the embodiments of the invention, the feed ingredient may comprise an at least 15 % higher content of soluble NSP than the unprocessed soybean meal in the biomass.

In any of the embodiments of the invention, the feed ingredient may comprise an at least 20 % higher content of soluble NSP than the unprocessed soybean meal in the biomass.

In any of the embodiments of the invention, the feed ingredient may comprise a higher content of soluble NSP than the unprocessed soybean meal in the biomass in the range of from 10% to 50%.

In any of the embodiments of the invention, the feed ingredient may have an at least 2% (MJ/kg DM)increased amount of metabolisable energy (ME) compared to the amount of ME in the biomass from where the feed ingredient is derived.

In any of the embodiments of the invention, the feed ingredient may have an increased amount of metabolisable energy (ME) in the range of from 1.5% to 10% (MJ/kg DM) compared to the amount of ME in the biomass from where the feed ingredient is derived.

In any of the embodiments of the invention, the feed ingredient may comprise at least 5 % less insoluble NSP than the biomass from where the feed ingredient is derived.

In any of the embodiments of the invention, the feed ingredient may have a higher fraction of soluble peptides below 20 kDa compared to the fraction of soluble peptides below 20 kDa in the biomass from where the feed ingredient is derived.

In any of the embodiments of the invention, the feed ingredient have a higher fraction of soluble peptides below 20 kDa of 6-10 % compared to the fraction of soluble peptides below 20 kDa in the biomass from where the feed ingredient is derived.

The product of the invention can be prepared by a method wherein a biomass comprising 50% by weight or more of dehulled and defatted soybean meal is mixed with spent brewer's yeast in a ratio of 100:2 to 100:8 of soybean meal : yeast by weight of dry matter, and water, to a reaction dry matter content of 44% to 53% by weight and fed to a reaction container, where after the mixture is incubated for 8-20 hours at 24-35 °C, optionally heat treated, and then dried to 3% to 10% moisture.

Accordingly, in its second aspect, the invention relates to a method for preparing a fermented feed ingredient according to any of the claims 1-12 comprising mixing a biomass of proteinaceous plant parts, where said biomass comprises 50% by weight or more of dehulled and defatted soybean meal with spent brewer's yeast in a ratio of biomass to yeast of 100:2 to 100:8 by weight of dry matter, and water, to a reaction dry matter content of 44% to 53% by weight and feeding the resulting mixture to a reaction container, where after the mixture is incubated for 8-20 hours at 24-35 °C , optionally heat treated, and dried to 3% to 10% moisture.

In any embodiment of the method of the invention, the a ratio of biomass to yeast may e.g. be 100:2, 100:3, 100:4, 100:5, 100:6, 100:7, or 100:8 by weight of dry matter.

In any of the embodiments of the method of the invention, the dry matter content in the reaction mixture fed to the reaction container, may by 44%, 45%, 46%, 47%, 48%, 49%, 50%, 51%, 52% or 53% by weight.

In any embodiments of the method of the invention, the skilled person would be able to select reaction temperature and time.

In a third aspect of the invention, use of a feed ingredient according to the invention in a diet for production animals, in particular newborn and young animals, such as piglets, calves, and chickens is disclosed.

The feed ingredient of the invention may be used in a feed product or a nutritional supplement for production animals containing from 0.5% to 99% by weight of the feed ingredient of the invention.The feed product or nutritional supplement may be for use in a diet for production animals, such as a diet for improving performance in production animals, in particular newborn and young animals, such as piglets, calves, and poultry.

### EXAMPLES

### Material and methods

### Example A

Five batches of the product of invention were prepared from five different raw material batches as follows:
Five samples of dehulled and defatted soybean meal were mixed with spent brewer's yeast in a ratio of soybean meal : yeast of approximately 100:2 to 100:5 by weight of dry matter, and water, to a reaction dry matter content in the starting mixture of approximately 50% and fed to a reaction container, where after the mixture is incubated for at least 8 hours at 24-35 °C, optionally heat treated, and then dried to 5% to 8% moisture.

The protein content and moisture of the five products were determined to the following:

| | Batch 1 | Batch 2 | Batch 3 | Batch 4 | Batch 5 |
|---|---|---|---|---|---|
| Protein as is wt% (Dumas) | 56.65% | 55.80% | 55.00% | 56.24% | 58.17% |
| Moisture (103°C 4h) | 7.17% | 7.40% | 7.72% | 6.92% | 5.37% |

### Example 1:

### Small scale screening showing the effect of yeast on soluble and insoluble NSP fractions in SBM

In this screening, the content of soluble and insoluble NSP in batch 1-5 of example A and five corresponding SBM products (SBM 1-5) (reference products - corresponding samples of dehulled and defatted soybean meal) was determined. The reference products are originating from the exact same biomasses as used to produce the corresponding batches, e.g. the biomass used to produce batch 1 are the same biomass as SBM 1 and so forth.

The content of soluble and insoluble NSP's in the products were analysed according to the Dietary fiber analysis (Englyst et al., 1994).

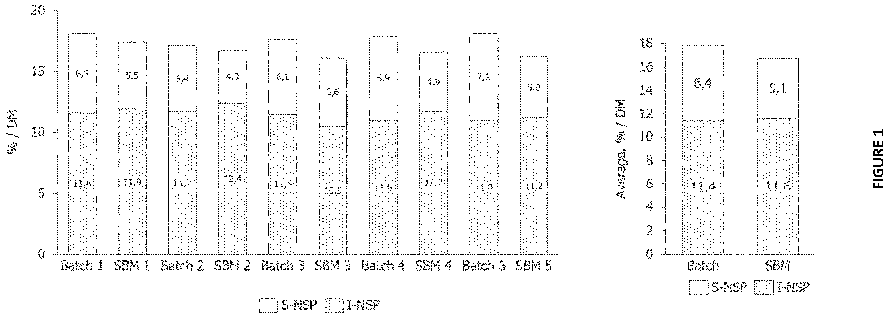

The results are illustrated in Figure 1, which shows both the content of soluble NSP (S-NSP) and insoluble NSP (I-NSP) for each screening and the average of the results of the screening. The results show that the content of S-NSP in the batches is on average 6.4% by weight, as compared to 5.1 % by weight in the untreated SBM reference product. This means, on average, that about 25 % more of the NSP were made soluble during the processing of the SBM into the product of the invention by processing with the yeast.

Note: During the incubation process of the biomass, 9% by weight of the biomass was lost (due to loss of anti-nutritional factors (ANF's)), whereby the other nutrients were up-concentrated. The products comprised about 55-56% by weight crude protein. The NSP fractions were also up-concentrated. If the increased content of S-NSP was solely due to up-concentration, the content would be:
5.1 weight % S-NSP (in the SBM reference product)/0.91 (loss of 9% biomass) => 5.6%, which is less than the actual result of 6.4 weight %.

This shows that there has been a modification of the NSP structure caused by NSP-ase active enzymes expressed by the spent brewer's yeast.

### Example 2

### Showing improved production of organic acid due to processing with spent-brewer's yeast

An experiment was performed to describe the improved organic acid production in the gut system in pre-weaned calves and the corresponding increase in energy value of the feed ingredient based on Ex-Vivo trials.

### Experimental procedure:

Six samples from the same biomass (soy) batch were used: Two samples of untreated SBM and four samples of the product of the invention disclosed herein . The six feed samples were ground to 1 mm, and 0.5±0.030 g of each of the six feed samples was placed into a 100 mL incubation jar (Duran^{®}). Four replicates were made of each feed (n=24) along with four jars without feed (inoculum baseline fermentation, referred to as blanks). Fresh abomasal (340 mL from each calf) and ruminal (50 mL from each calf) fluid (pH: 4.8-5.2) was pooled from 3 male calves, i.e. a total of 390 mL fluid from each calf. The calves were 3-6 weeks old, from the same farm and fed the same diet, consisting mainly of whole milk. The rumen were transported directly to the lab in pre-heated (~39°C) thermos boxes. Abomasal and ruminal fluid was filtered through double layered cheesecloth. A rumen buffer media was prepared by adding the filtered abomasal and ruminal fluid to a standard buffer solution, which was prepared as described by Menke and Steingass (1988).

All six feed samples and 90 ml of the rumen buffer media were added to each bottle, flushed with CO₂ and incubated at 39°C for 48 hours. Cumulative gas production was recorded every 10 min. using the ANKOMRF system (vented at 51.71 mbar), as described by Cattani et al. (2014). The reaction was stopped after 48 hours by placing the jars on ice. Filtered fluid from each incubation bottle was collected for organic acid analyses. Energy content (ME, MJ/kgDM) of feeds was calculated based on 24 hours fermentation by using the German energy evaluation system (DLG, 2013

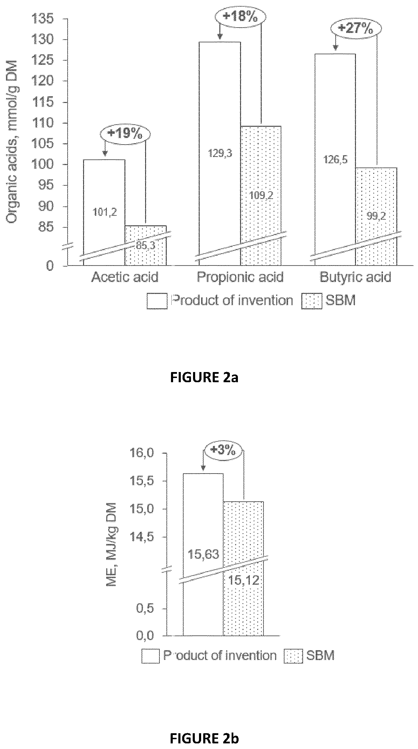

The results of organic acid production and the metabolisable energy are shown in Figures 2a and 2b, respectively. As can be seen from the figure 2a, between 18 and 27% higher organic acid production in the calves fed on the products of the invention is o compared to calves fed on unprocessed SBM. This corresponds to 3% higher metabolisable energy in the product of the invention compared to SBM. Young animals digestive system is not fully developed and hence, they have difficulties in digesting the insoluble NSP fractions whereas they are able to digest the soluble NSP fractions. When the animals in this example are fed with the product of the invention, having a higher amount of soluble NSP than the untreated SBM, the results show that they will have a higher amount of organic acids in the gut than if fed with the untreated SBM.

### Example 3

### Showing improved animal growth performance with higher energy content in the feed

An experiment was performed to describe the improved growth performance and better weight uniformity in pre-weaned calves as a response to better utilization of the feed ingredient.

### Experimental procedure:

The trial was performed on a commercial farm in the Netherlands. A total of 121 calves arrived on the same day at 2 weeks of age (14.77±0.18 days; 54.16±0.33 kg body weight [mean±SEM; standard error of the mean]) and were weaned at 6-8 weeks of age. Calves were group housed.

Feeding: Diets were formulated according to Dutch Feed Recommendation system (20% crude protein in starter feed), and two dietary treatments were fed:
- SBM = 13.75% inclusion rate Control)
- product of the invention = 16.03% inclusion rate

Diets were fed for ad libitum consumption from start (2 weeks of age) to the eighth week of trial (= 10 weeks of age).

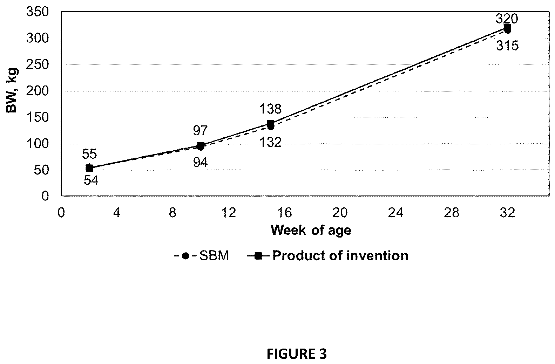

Measurements: Body weight (BW) was measured at the start of the trial (~week 2 of age), at week 10 and 15 of age and at slaughter (=carcass weight). The results are shown in figure 3.

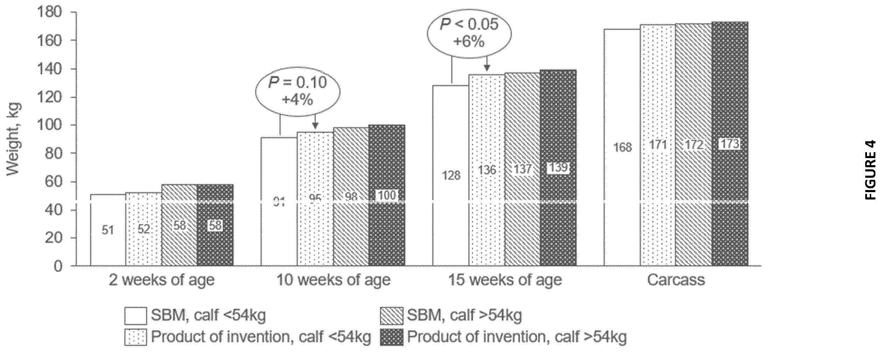

The calves fed on the product of the invention were small at the beginning of the trial, but at 15 weeks of age the calves became significantly heavier than the SBM fed calves. At slaughter the calves were 5 kg heavier and carcass weight was 2 kg heavier than SBM fed calves. Better weight uniformity was obtained when the product of the invention was fed. On arrival at the farm, calves were split into two groups depending on their weight above or below 54kg. Little calves reached the same weight as bigger calves by week 15 when fed the product of the invention, whereas little calves fed untreated SBM were significantly smaller. The trend lasted throughout the entire experiment. These data indicate that more energy and nutrients were provided from the product of the invention and that young animals benefitted more from a pre-digested fed. The results are shown in Figure 4.

### Example 4

### Showing improved animal growth performance with higher energy content in the feed

An experiment was performed to describe the improved growth performance and better uniformity in lambs as a response to better utilization of the feed ingredient.

### Experimental procedure:

The trial was performed on a commercial feedlot farm South Africa.

Two identical trials with sheep were performed with Dormer or the Dohne Merino breeds. Lambs were allocated to one of two treatments (19.3% crude protein; 11.9 MJ ME/kg):
Control: SBM (19.5% inclusion rate in the starter feed)
Test: product of the invention (15% inclusion rate in the starter feed)
Lambs were weaned at the age of 54 days, weighed at birth and at weaning.

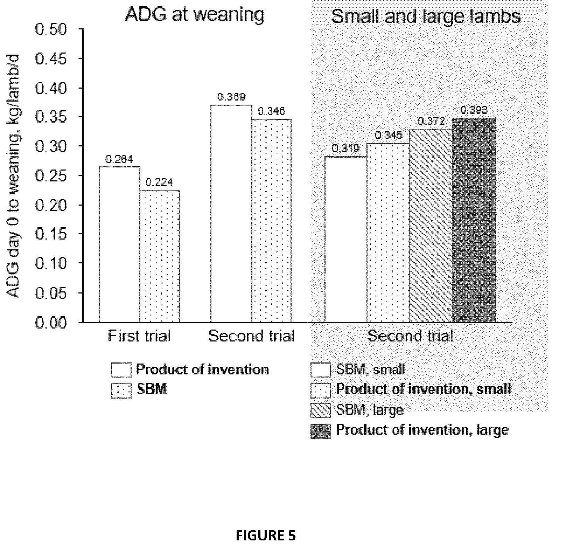

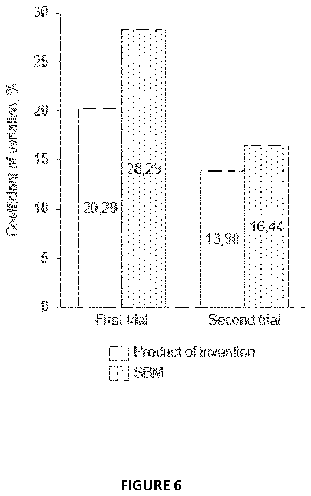

Lambs gained more weight when the product of the invention compared to untreated SBM. Lambs fed product of the invention were more uniform in weight. The results are shown in Figures 5 and 6.

### Example 5

### Change in peptide size distribution

Five samples of raw materials and corresponding untreated SBM products were prepared in PBS extraction buffer (10% solution). After 24 hours of extraction, all samples were heated at 95°C for 15min and centrifuged. Supernatants were diluted in sample buffer according to Laemmli et al. (Laemmli et al., 1970) and loaded on Criterion TGX, Precast Gels (Bio-Rad) using The Criterion Cell (Bio-Ras, 1656019). The gel was fixed and stained with Coomassie brilliant blue.

Quantification of the gel provides the following results:

| Protein size kDa | SBM 6 | Batch 6 | SBM 7 | Batch 7 | SBM 8 | Batch 8 | SBM 9 | Batch 9 | SBM 10 | Batch 10 |
|---|---|---|---|---|---|---|---|---|---|---|
| ≥60 | 34.2% | 34.7% | 34.0% | 34.6% | 31.4% | 32.0% | 34.7% | 35.0% | 33.2% | 33.9% |
| 20-60 | 42.2% | 40.2% | 40.8% | 38.6% | 41.6% | 39.0% | 41.9% | 38.9% | 40.9% | 39.1% |
| ≤20 | 23.6% | 25.1 % | 25.2% | 26.8% | 27.0% | 29.0% | 23.5% | 26.1 % | 25.9% | 27.0% |

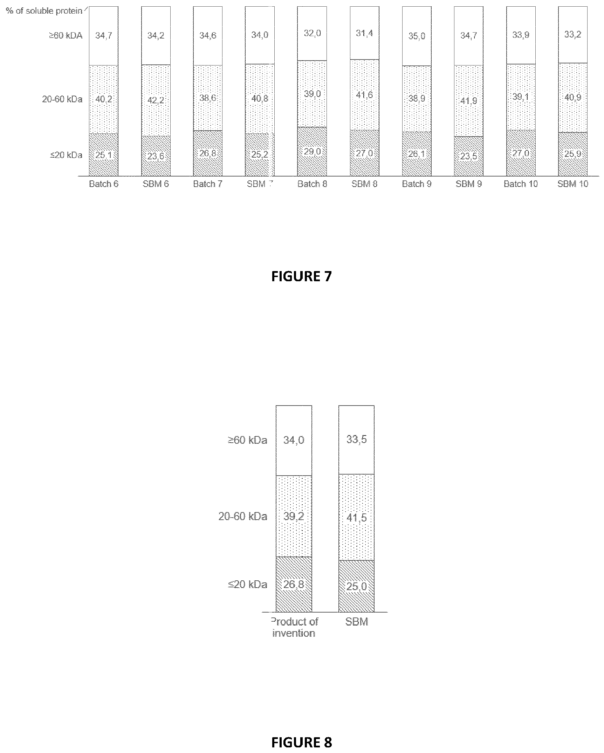

The results are illustrated in Figures 7 and 8.

| Peptide size kDa | Average SBM | Average Product of the invention |
|---|---|---|
| >60 | 33.5 | 34.0 |
| 20-60 | 41.5 | 39.2 |
| <20 | 25.0 | 26.7 |

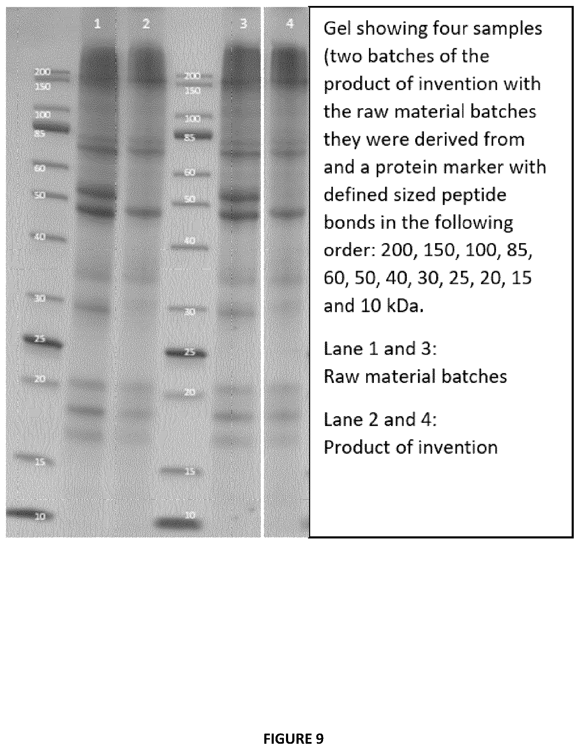

SDS quantification determines the fraction of total soluble protein within a given range of peptide sizes. The product of the invention contains a higher fraction of soluble peptides below 20 kDa. This is illustrated in Figure 9. Besides the increased fraction of smaller peptides, the composition of peptides within each size category seems to be more optimal for the product of invention as it favours utilization within the animal. Improved utilization within the animal is seen by increased speed of absorption in the intestine as further illustrated in example 6.

### Example 6

### Showing improved amino acids absorption as a result of changes to peptide size distribution

An experiment was performed to describe the improved lysine absorption in weaning piglets.

### Experimental procedure:

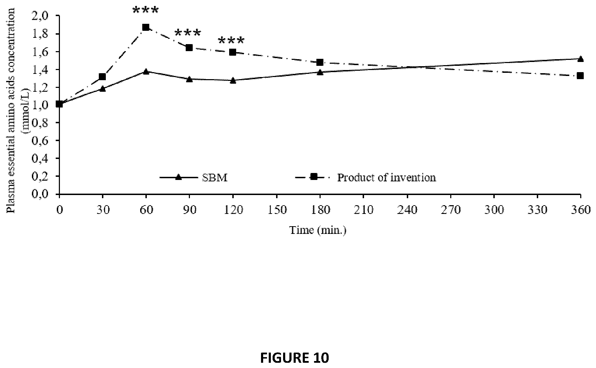

A total of 7 cross-bred (Danish Landrace, Yorkshire x Duroc) pigs with an average body weight of 18 ± 1.25 kg were fed a commercial diet prior to the study. The pigs were fitted with a jugular vein catheter 3 days before the experimental period. Starting with day one of the trial, the pigs were fed the experimental diet (product of the invention (batches) as listed in example 5) in the morning from day 4 to 5 for 15 min. and received ad libitum of the commercial diet (untreated SBM as listed in example 5) in the afternoon, followed by feed withdrawal after an hour from feeding. Diets were balanced on 20% crude protein. The product of the invention and SBM originated from the same soy batch. Blood samples were collected at time points 0, 30, 60, 90, 120, 180 and 360 minutes after feeding. Plasma was analysed for individual amino acids. The results are shown in Figure 10.

As can be seen from the results, peak absorption of essential amino acids is 60 min. post feeding in the product of the invention and more essential amino acids are available and absorbed faster. Amino acid absorption and the following deposition in the muscles of the animals requires energy. Energy comes from sugar and starch which is absorbed quickly (within an hour) by the animals, so by time-optimising the absorption of both energy and amino acids, a higher muscle formation is the result. In the product of the invention, the concentration of amino acids are higher which will entail that more amino acids can be deposited in the muscles of the animal and hence the animal will increase weight faster.

### References

Englyst HN, Quigley ME and Hudson GJ (1994) Analyst, 119, 1497-1509.

Cattani, M., Tagliapietra, F., Maccarana, L., Hansen, H.H., Bailoni, L., Schiavon, S. 2014. In vitro total gas and methane production measurements from closed or vented rumen batch culture systems. Journal of Dairy Science, 97:1736-1741.

DLG, 2013. Arbeitskreises Futter und Fütterung: Leitfaden zur Berechnung des Energiegehaltes bei Einzel- und Mischfuttermitteln für die Schweine- und Rinderfütterung. DLG Verlag.

Menke, K.H., Steingass, H. 1988. Estimation of the energetic feed value obtained from chemical analysis and in vitro gas production using rumen fluid. Animal Research and Development, 10:7-55.

Laemmli, U.K. 1970. Cleavage of Structural Proteins during the Assembly of the Head of Bacteriophage T4. Nature vol. 227 680-685.

## Claims

1. A fermented feed ingredient derived from spent brewer's yeast and a biomass of proteinaceous plant parts, where said biomass comprises 50% by weight or more of dehulled and defatted soybean meal, wherein the crude protein content of said fermented feed ingredient is in the range of from 35% to 65% by weight on dry matter basis, wherein from 2% to 8% by weight on dry matter basis of the protein is derived from yeast, and wherein part of the insoluble non-starch polysaccharides (NSP) in the biomass has been solubilised by processing with the spent brewer's yeast whereby the fermented feed ingredient comprises an at least 10 % higher content of soluble non-starch polysaccharides (NSP) than the unprocessed soybean meal in the biomass.

2. The fermented feed ingredient according to claim 1 wherein the biomass of proteinaceous plant part comprises 50% by weight or less of proteinaceous plant part other than dehulled and defatted soybean meal.

3. The fermented feed ingredient according to any of the preceding claims wherein the biomass of proteinaceous plant part comprises at least 55% by weight of dehulled and defatted soybean meal, such as at least 60% by weight, such as at least 65% by weight, such as at least 70% by weight, such as at least 75% by weight, such as at least 80% by weight, such as at least 85% by weight, such as at least 90% by weight, such as at least 95% by weight, or such as at least 99% by weight of dehulled and defatted soybean meal.

4. The fermented feed ingredient according to any of the preceding claims wherein the biomass of proteinaceous plant part comprises dehulled and defatted soybean meal in the range of from 50% to 100% by weight, such as in the range of from 60% to 100% by weight, such as in the range of from 70% to 100% by weight, such as in the range of from 80% to 100% by weight.

5. The fermented feed ingredient according to any of the preceding claims wherein the crude protein content of said feed ingredient is in the range of from 40% to 65% by weight on dry matter basis, such as in the range of from 45% to 65% by weight on dry matter basis, or such as in the range of from 50% to 60% by weight on dry matter basis.

6. The fermented feed ingredient according to any of the preceding claims wherein from 2% to 6% by weight on dry matter basis of the protein is derived from yeast, or such as from 2% to 5% by weight on dry matter basis of the protein is derived from yeast.

7. The fermented feed ingredient according to any of the preceding claims wherein said feed ingredient comprises an at least 15 % higher content of soluble NSP than the unprocessed soybean meal in the biomass, such as an at least 20 % higher content.

8. The fermented feed ingredient according to any of the preceding claims wherein said feed ingredient comprises a higher content of soluble NSP in the range of from 10% to 50% than the unprocessed soybean meal in the biomass.

9. The fermented feed ingredient according to any of the preceding claims wherein said feed ingredient is having an at least 2% (MJ/kg DM) increased amount of metabolisable energy (ME) compared to the amount of ME in the biomass from where the feed ingredient is derived.

10. The fermented feed ingredient according to any of the preceding claims wherein said feed ingredient is having an increased amount of metabolisable energy (ME) in the range of from 1.5% to 10% (MJ/kg DM) compared to the amount of ME in the biomass from where the feed ingredient is derived.

11. The fermented feed ingredient according to any of the preceding claims, wherein the feed ingredient comprises at least 5 % less insoluble non-starch polysaccharides (NSP) than the biomass from where the feed ingredient is derived.

12. The fermented feed ingredient according to any of the preceding claims wherein said feed ingredient is having a higher fraction of soluble peptides below 20 kDa compared to the fraction of soluble peptides below 20 kDa in the biomass from where the feed ingredient is derived.

13. Method for preparing a fermented feed ingredient according to any of the claims 1-12 comprising mixing a biomass of proteinaceous plant parts, where said biomass comprises 50% by weight or more of dehulled and defatted soybean meal with spent brewer's yeast in a ratio of biomass to yeast of 100:2 to 100:8 by weight of dry matter, and water, to a reaction dry matter content of 44% to 53% by weight and feeding the resulting mixture to a reaction container, where after the mixture is incubated for 8-20 hours at 24-35 °C, optionally heat treated, and dried to 3% to 10% moisture.

14. Use of a fermented feed ingredient according to any of the claims 1-12 for the manufacture of a processed feed product for animal consumption, preferably wherein the animal are production animals, more preferably newborn and young animals, such as piglets, calves, and poultry, in need of prebiotic oligosaccharides.

## Patentansprüche

1. Fermentierter Futterbestandteil, der aus verbrauchter Brauereihefe und einer Biomasse von proteinhaltigen Pflanzenteilen stammt, wobei die Biomasse zu 50 Gew.-% oder mehr geschältes und entfettetes Sojabohnenmehl umfasst, wobei der Rohproteingehalt des fermentierten Futterbestandteils im Bereich von 35 Gew.-% bis 65 Gew.-% bezogen auf die Trockenmasse liegt, wobei 2 Gew.-% bis 8 Gew.-% des Proteins bezogen auf die Trockenmasse aus Hefe stammen, und wobei ein Teil der unlöslichen Nicht-Stärke-Polysaccharide (NSP) in der Biomasse durch Verarbeitung mit der verbrauchten Brauereihefe solubilisiert wurde, wodurch der fermentierte Futterbestandteil einen um mindestens 10 % höheren Gehalt an löslichen Nicht-Stärke-Polysacchariden (NSP) als das unverarbeitete Sojabohnenmehl in der Biomasse aufweist.

2. Fermentierter Futterbestandteil nach Anspruch 1, wobei die Biomasse von proteinhaltigen Pflanzenteilen zu 50 Gew.-% oder weniger andere proteinhaltige Pflanzenteile als geschältes und entfettetes Sojabohnenmehl umfasst.

3. Fermentierter Futterbestandteil nach einem der vorhergehenden Ansprüche, wobei die Biomasse von proteinhaltigem Pflanzenteil zu mindestens 55 Gew.-% geschältes und entfettetes Sojabohnenmehl umfasst, beispielsweise zu mindestens 60 Gew.-%, beispielsweise mindestens 65 Gew.-%, beispielsweise mindestens 70 Gew.-%, beispielsweise mindestens 75 Gew.-%, beispielsweise mindestens 80 Gew.-%, beispielsweise mindestens 85 Gew.-%, beispielsweise mindestens 90 Gew.-%, beispielsweise mindestens 95 Gew.-% oder beispielsweise mindestens 99 Gew.-% geschältes und entfettetes Sojabohnenmehl.

4. Fermentierter Futterbestandteil nach einem der vorhergehenden Ansprüche, wobei die Biomasse von proteinhaltigem Pflanzenteil geschältes und entfettetes Sojabohnenmehl in einem Bereich von 50 Gew.-% bis 100 Gew.-%, beispielsweise im Bereich von 60 Gew.-% bis 100 Gew.-%, beispielsweise im Bereich von 70 Gew.-% bis 100 Gew.-%, beispielsweise im Bereich von 80 Gew.-% bis 100 Gew.-%, umfasst.

5. Fermentierter Futterbestandteil nach einem der vorangehenden Ansprüche, wobei der Rohproteingehalt des Futterbestandteils im Bereich von 40 Gew.-% bis 65 Gew.-% bezogen auf die Trockenmasse liegt, wie beispielsweise im Bereich von 45 Gew.-% bis 65 Gew.-% bezogen auf die Trockenmasse oder wie beispielsweise im Bereich von 50 Gew.-% bis 60 Gew.-% bezogen auf die Trockenmasse.

6. Fermentierter Futterbestandteil nach einem der vorangehenden Ansprüche, wobei 2 Gew.-% bis 6 Gew.-% bezogen auf die Trockenmasse des Proteins aus Hefe stammen, oder beispielsweise 2 Gew.-% bis 5 Gew.-% bezogen auf die Trockenmasse des Proteins aus Hefe stammen.

7. Fermentierter Futterbestandteil nach einem der vorangehenden Ansprüche, wobei der Futterbestandteil einen um mindestens 15 % höheren Gehalt an löslichen NSP als das unverarbeitete Sojabohnenmehl in der Biomasse umfasst, wie beispielsweise einen um mindestens 20 % höheren Gehalt.

8. Fermentierter Futterbestandteil nach einem der vorangehenden Ansprüche, wobei der Futterbestandteil einen höheren Gehalt an löslichen NSP im Bereich von 10 % bis 50 % als das unverarbeitete Sojabohnenmehl in der Biomasse umfasst.

9. Fermentierter Futterbestandteil nach einem der vorangehenden Ansprüche, wobei der Futterbestandteil eine um mindestens 2 % (MJ/kg TM) erhöhte Menge an metabolisierbarer Energie (ME) im Vergleich zur Menge an ME in der Biomasse aufweist, aus der der Futterbestandteil stammt.

10. Fermentierter Futterbestandteil nach einem der vorangehenden Ansprüche, wobei der Futterbestandteil eine erhöhte Menge an metabolisierbarer Energie (ME) im Bereich von 1,5 % bis 10 % (MJ/kg TM) im Vergleich zu der Menge an ME in der Biomasse aufweist, aus der der Futterbestandteil stammt.

11. Fermentierter Futterbestandteil nach einem der vorangehenden Ansprüche, wobei der Futterbestandteil um mindestens 5 % weniger unlösliche Nicht-Stärke-Polysaccharide (NSP) als die Biomasse umfasst, aus der der Futterbestandteil stammt.

12. Fermentierter Futterbestandteil nach einem der vorangehenden Ansprüche, wobei der Futterbestandteil einen höheren Anteil an löslichen Peptiden unter 20 kDa im Vergleich zu dem Anteil an löslichen Peptiden unter 20 kDa in der Biomasse aufweist, aus der der Futterbestandteil stammt.

13. Verfahren zum Herstellen eines fermentierten Futterbestandteils nach einem der Ansprüche 1 bis 12, umfassend das Mischen einer Biomasse von proteinhaltigen Pflanzenteilen, wobei die Biomasse zu 50 Gew.-% oder mehr geschältes und entfettetes Sojabohnenmehl mit verbrauchter Brauereihefe in einem Verhältnis von Biomasse zu Hefe von 100:2 bis 100:8 bezogen auf die Trockenmasse und Wasser zu einem Reaktions-Trockenmassegehalt von 44 Gew.-% bis 53 Gew.-% umfasst, und das Zuführen des resultierenden Gemischs in einen Reaktionsbehälter, wobei das Gemisch danach für 8 bis 20 Stunden bei 24 bis 35 °C inkubiert wird, optional wärmebehandelt wird, und auf 3 % bis 10 % Feuchtigkeit getrocknet wird.

14. Verwendung eines fermentierten Futterbestandteils nach einem der Ansprüche 1 bis 12 zur Herstellung eines verarbeiteten Futtermittelprodukts für den Tierverzehr, vorzugsweise wobei die Tiere Nutztiere sind, stärker bevorzugt neugeborene und junge Tiere, wie Ferkel, Kälber und Geflügel, die präbiotische Oligosaccharide benötigen.

## Revendications

1. Ingrédient alimentaire fermenté dérivé de levure de bière usée et d'une biomasse de parties de plantes protéagineuses, où ladite biomasse comprend 50 % en poids ou plus de farine de soja décortiquée et dégraissée, dans lequel la teneur en protéines brutes dudit ingrédient alimentaire fermenté se situe dans la plage allant de 35 % à 65 % en poids sur la base de la matière sèche, dans lequel de 2 % à 8 % en poids sur la base de la matière sèche de la protéine est dérivé de levure, et dans lequel une partie des polysaccharides non amylacés (PNA) insolubles dans la biomasse a été solubilisée par un traitement avec la levure de bière usée, moyennant quoi l'ingrédient alimentaire fermenté comprend une teneur en polysaccharides non amylacés (PNA) solubles supérieure d'au moins 10 % à celle de la farine de soja non traitée dans la biomasse.

2. Ingrédient alimentaire fermenté selon la revendication 1, dans lequel la biomasse de partie de plante protéagineuse comprend 50 % en poids ou moins de partie de plante protéagineuse autre que la farine de soja décortiquée et dégraissée.

3. Ingrédient alimentaire fermenté selon l'une quelconque des revendications précédentes, dans lequel la biomasse de partie de plante protéagineuse comprend au moins 55 % en poids de farine de soja décortiquée et dégraissée, tel qu'au moins 60 % en poids, tel qu'au moins 65 % en poids, tel qu'au moins 70 % en poids, tel qu'au moins 75 % en poids, tel qu'au moins 80 % en poids, tel qu'au moins 85 % en poids, tel qu'au moins 90 % en poids, tel qu'au moins 95 % en poids, ou tel qu'au moins 99 % en poids de farine de soja décortiquée et dégraissée.

4. Ingrédient alimentaire fermenté selon l'une quelconque des revendications précédentes, dans lequel la biomasse de partie de plante protéagineuse comprend de la farine de soja décortiquée et dégraissée dans la plage allant de 50 % à 100 % en poids, tel que dans la plage allant de 60 % à 100 % en poids, tel que dans la plage allant de 70 % à 100 % en poids, tel que dans la plage allant de 80 % à 100 % en poids.

5. Ingrédient alimentaire fermenté selon l'une quelconque des revendications précédentes, dans lequel la teneur en protéines brutes dudit ingrédient alimentaire se situe dans la plage allant de 40 % à 65 % en poids sur la base de la matière sèche, tel que dans la plage allant de 45 % à 65 % en poids sur la base de la matière sèche, ou tel que dans la plage allant de 50 % à 60 % en poids sur la base de la matière sèche.

6. Ingrédient alimentaire fermenté selon l'une quelconque des revendications précédentes, dans lequel de 2 % à 6 % en poids sur la base de la matière sèche de la protéine est dérivé de levure, ou tel que de 2 % à 5 % en poids sur la base de la matière sèche de la protéine est dérivé de levure.

7. Ingrédient alimentaire fermenté selon l'une quelconque des revendications précédentes, dans lequel ledit ingrédient alimentaire comprend une teneur en PNA solubles supérieure d'au moins 15 % à celle de la farine de soja non traitée dans la biomasse, telle qu'une teneur supérieure d'au moins 20 %.

8. Ingrédient alimentaire fermenté selon l'une quelconque des revendications précédentes, dans lequel ledit ingrédient alimentaire comprend une teneur en PNA solubles supérieure dans la plage allant de 10 % à 50 % par rapport à la farine de soja non traitée dans la biomasse.

9. Ingrédient alimentaire fermenté selon l'une quelconque des revendications précédentes, dans lequel ledit ingrédient alimentaire présente une quantité d'énergie métabolisable (EM) augmentée d'au moins 2 % (MJ/kg MS) par rapport à la quantité d'EM dans la biomasse à partir de laquelle l'ingrédient alimentaire est dérivé.

10. Ingrédient alimentaire fermenté selon l'une quelconque des revendications précédentes, dans lequel ledit ingrédient alimentaire présente une quantité d'énergie métabolisable (EM) augmentée dans la plage allant de 1,5 % à 10 % (MJ/kg MS) par rapport à la quantité d'EM dans la biomasse à partir de laquelle l'ingrédient alimentaire est dérivé.

11. Ingrédient alimentaire fermenté selon l'une quelconque des revendications précédentes, dans lequel l'ingrédient alimentaire comprend au moins 5 % de moins de polysaccharides non amylacés (PNA) insolubles que la biomasse à partir de laquelle l'ingrédient alimentaire est dérivé.

12. Ingrédient alimentaire fermenté selon l'une quelconque des revendications précédentes, dans lequel ledit ingrédient alimentaire présente une fraction de peptides solubles inférieurs à 20 kDa plus élevée par rapport à la fraction de peptides solubles inférieurs à 20 kDa dans la biomasse à partir de laquelle l'ingrédient alimentaire est dérivé.

13. Procédé pour la préparation d'un ingrédient alimentaire fermenté selon l'une quelconque des revendications 1 à 12, comprenant le mélange d'une biomasse de parties de plantes protéagineuses, où ladite biomasse comprend 50 % en poids ou plus de farine de soja décortiquée et dégraissée, avec de la levure de bière usée dans un rapport de la biomasse sur la levure allant de 100:2 à 100:8 par poids de matière sèche, et de l'eau, jusqu'à une teneur en matière sèche de réaction de 44 % à 53 % en poids, et l'introduction du mélange résultant dans un récipient de réaction, après quoi le mélange est incubé pendant 8 à 20 heures à 24 à 35 °C, facultativement traité thermiquement, et séché jusqu'à 3 % à 10 % d'humidité.

14. Utilisation d'un ingrédient alimentaire fermenté selon l'une quelconque des revendications 1 à 12 pour la fabrication d'un produit alimentaire transformé pour la consommation animale, de préférence dans laquelle les animaux sont des animaux de production, plus préférablement des animaux nouveau-nés et jeunes, tels que des porcelets, des veaux et de la volaille, ayant besoin d'oligosaccharides prébiotiques.
